# EUROPEAN PATENT APPLICATION

(11) **EP 4 717 431 A1**
(43) Date of publication of application: **01.04.2026**
(21) Application number: 25191262.2
(22) Date of filing: 23.07.2025
(51) Int. Cl.: B29C 45/73, B29C 49/64, B29C 45/72, B29C 49/48

(54) **INJECTION MOLDING APPARATUS**

(30) Priority: 26.09.2024 JP 2024167081
(71) Applicant: Sumitomo Heavy Industries, Ltd., Tokyo 141-6025 (JP)
(72) Inventor: SATO, Takayuki, Chiba, 263-0001, (JP); TAKAHASHI, Rei, Chiba, 263-0001, (JP); YOSHIDA, Junichi, Chiba, 263-0001 (JP); NAKAMURA, Toru, Chiba, 263-0001 (JP)
(74) Representative: Louis Pöhlau Lohrentz

(57) **Abstract**

An injection molding apparatus (1) capable of reducing a temperature difference in a circumferential direction of a cylindrical portion of a preform (610) is provided. The injection molding apparatus (1) includes a female mold portion (12) that is columnar and has a recessed portion (122) formed therein; and a peripheral member (13) that is provided around the female mold portion (12) to cover at least a part of an outer peripheral surface (120) of the female mold portion (12). A hole (142) extending in a direction intersecting a center line direction of the female mold portion (12) is formed in the peripheral member (13), a groove (126) recessed from the outer peripheral surface (120) is formed over an entire periphery of the female mold portion (12) at a position outside the recessed portion (122) and facing the hole (142), and a flow path through which a medium for cooling the recessed portion (122) flows is formed by the hole (142) of the peripheral member (13) and the groove (126) of the female mold portion (12).

## Description

### BACKGROUND OF THE INVENTION

### Field of the Invention

The present invention relates to an injection molding apparatus.

### Description of Related Art

For example, a parison molding mold used for injection blow molding and composed of a plurality of split molds, as described in Japanese Patent No. 3134441, is configured as follows. That is, the split mold includes a split mold main body, a cooling feeder that is disposed in the split mold main body to partially cool a parison, and a floating device that causes the cooling feeder to float from the split mold main body during mold opening to provide a gap between the cooling feeder and the split mold main body.

### SUMMARY OF THE INVENTION

For example, in a case where a final molding product is a bottle container molded using polyethylene terephthalate (PET), it is desirable that a temperature difference in a circumferential direction is smaller in a test tube-shaped preform (in other words, parison) used for blow molding. This is because the smaller the temperature difference in the circumferential direction in the preform, the easier the extension is uniformly performed over the entire periphery during the blow molding, and the quality of the final molding product is improved.

An object of the present invention is an injection molding apparatus capable of reducing a temperature difference in a circumferential direction of a cylindrical portion of a preform.

The present invention that has been completed under such an object is an injection molding apparatus including a female mold portion that is columnar and has a recessed portion formed therein; and a peripheral member that is provided around the female mold portion to cover at least a part of an outer peripheral surface of the female mold portion. A hole extending in a direction intersecting a center line direction of the female mold portion is formed in the peripheral member, a groove recessed from the outer peripheral surface is formed over the entire periphery of the female mold portion at a position outside the recessed portion and facing the hole, and a flow path through which a medium for cooling the recessed portion flows is formed by the hole of the peripheral member and the groove of the female mold portion.

Here, the groove may have a dimension in the center line direction greater than a depth of the groove.

In addition, the groove may include a partition wall that separates a portion on one side in the center line direction from a portion on the other side in the center line direction at a central portion in the center line direction.

In addition, a cutout that allows the portion on the one side and the portion on the other side to communicate with each other is formed in a portion of the partition wall in a circumferential direction.

In addition, the cutout may be formed at a position facing the hole.

In addition, a gate that serves as an inlet for resin to the recessed portion may be formed in the female mold portion, and an intersecting recessed portion, which is recessed in a direction intersecting the center line direction from the outer peripheral surface and allows the medium to flow therethrough, may be formed outside the gate.

In addition, a distance between a bottom portion of the intersecting recessed portion and the gate may be smaller than a distance between a bottom portion of the groove and the recessed portion.

According to the present invention, it is possible to reduce the temperature difference in the circumferential direction of the cylindrical portion of the preform.

### BRIEF DESCRIPTION OF THE DRAWINGS

FIG. 1 is a view of an example of a cross section of an injection blow molding machine according to an embodiment as viewed in an up-down direction.
FIG. 2 is a view of a cross section of the injection blow molding machine according to the embodiment as viewed in a second direction.
FIG. 3A is a view showing an example of a cross section before a preform is molded. FIG. 3B is a view showing an example of a cross section after the preform is molded.
FIG. 4A is a view showing an example of a cross section before a final molding product is molded. FIG. 3B is a view showing an example of a cross section after the final molding product is molded.
FIG. 5 is a view showing an example of the appearance of a female mold portion.
FIG. 6 is a view showing an example of a cross section of the female mold portion and a cavity plate.
FIG. 7 is a view showing an example of a cross section of a VII-VII portion of FIG. 6.

### DETAILED DESCRIPTION OF THE INVENTION

Hereinafter, embodiments of the present invention will be described in detail with reference to the accompanying drawings.

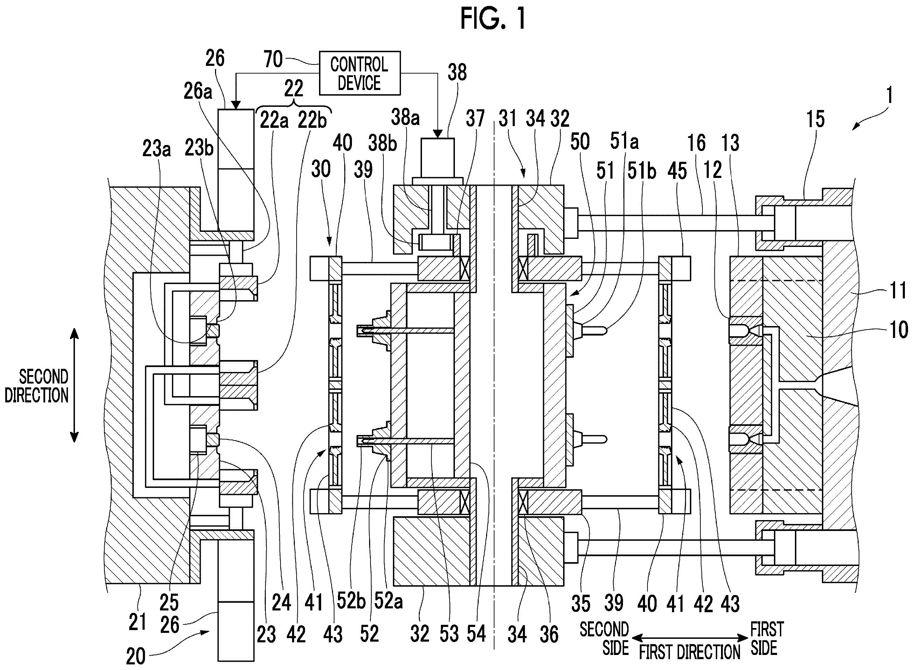

FIG. 1 is a view of an example of a cross section of an injection blow molding machine 1 according to an embodiment as viewed in an up-down direction.

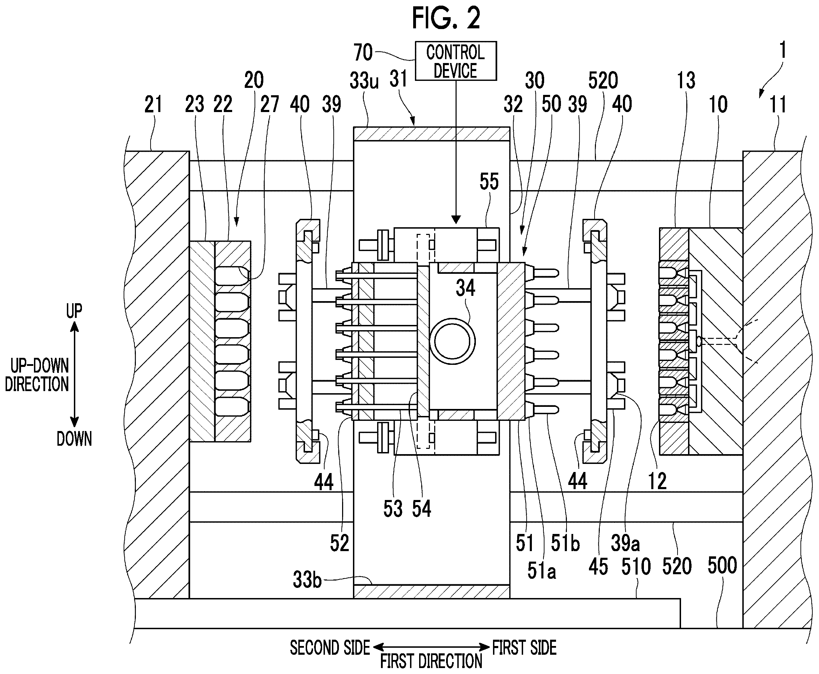

FIG. 2 is a view of an example of a cross section of the injection blow molding machine 1 according to the embodiment as viewed in a second direction.

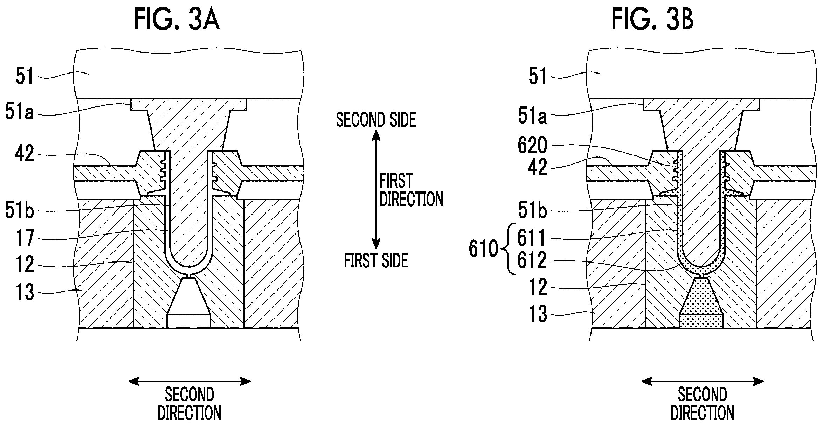

FIG. 3A is a view showing an example of a cross section before a preform 610 is molded. FIG. 3B is a view showing an example of a cross section after the preform 610 is molded.

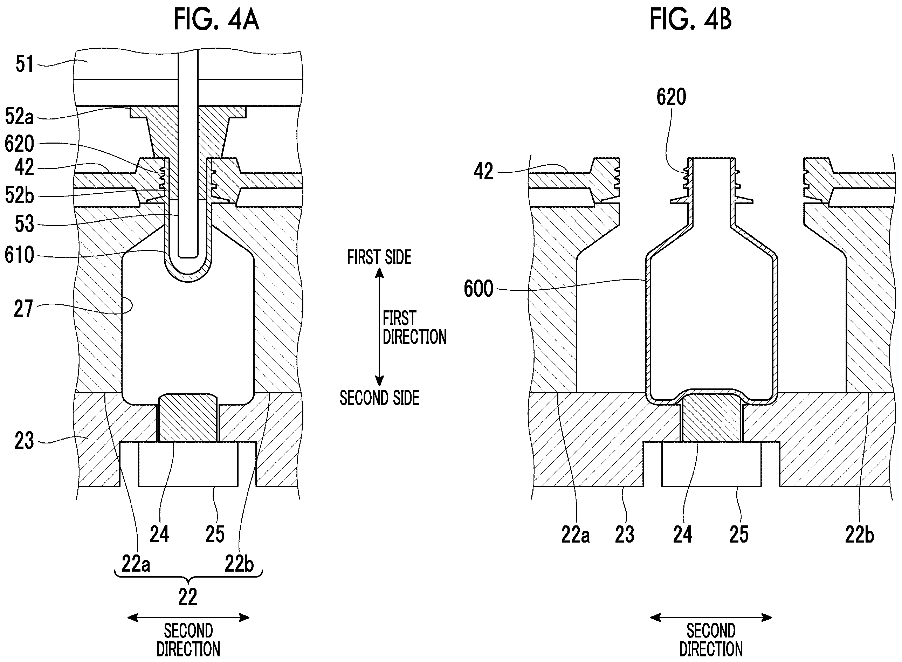

FIG. 4A is a view showing an example of a cross section before the final molding product 600 is molded. FIG. 4B is a view showing an example of a cross section after the final molding product 600 is molded.

FIGS. 1 and 2 show a mold opening state.

The injection blow molding machine 1 is an apparatus that performs injection molding and blow molding. The injection blow molding machine 1 molds, by the injection molding, a preform 610 having, for example, a test tube shape, which is an intermediate molding product, and molds a final molding product 600 such as a container by blowing high-pressure air into the inside of the preform 610 to expand the preform 610 by the blow molding.

The injection blow molding machine 1 includes the stationary mold 10, a movable mold 20 that is movable with respect to the stationary mold 10, and an intermediate mold 30 that is disposed between the stationary mold 10 and the movable mold 20. The injection blow molding machine 1 performs the injection molding at an injection station between the stationary mold 10 and the intermediate mold 30 by mold-closing the stationary mold 10 and the intermediate mold 30. In addition, the injection blow molding machine 1 performs the blow molding at a blow station between the intermediate mold 30 and the movable mold 20 by mold-closing the intermediate mold 30 and the movable mold 20. Hereinafter, the movement direction (in other words, a left-right direction in FIGS. 1 and 2) of the movable mold 20 with respect to the stationary mold 10 may be referred to as a "first direction". In addition, in the first direction, there is a case where a side where the stationary mold 10 is disposed is referred to as a "first side" and a side where the movable mold 20 is disposed is referred to as a "second side". In addition, the injection blow molding machine 1 is disposed such that the up-down direction in FIG. 2 is a vertical direction. Hereinafter, the up-down direction in FIG. 2 may be simply referred to as an "up-down direction". In addition, a direction (in other words, the up-down direction in FIG. 1) perpendicular to the first direction and the up-down direction may be referred to as a "second direction".

The injection blow molding machine 1 includes a stationary platen 11 fixed to a frame 500 fixed to a floor to hold the stationary mold 10, and a movable platen 21 slidably attached to a guide member 510 on the frame 500 to hold the movable mold 20. In addition, the injection blow molding machine 1 includes an intermediate mold support frame 31 that supports the intermediate mold 30 and is slidably attached to a guide member 510 between the stationary platen 11 and the movable platen 21.

In addition, the injection blow molding machine 1 includes an injection device (not shown) that injects resin into a cavity 17 formed between the stationary mold 10 and the intermediate mold 30 on a side opposite to the stationary mold 10 with respect to the stationary platen 11.

In addition, the injection blow molding machine 1 includes a mold clamping device (not shown) on a side opposite to the movable mold 20 with respect to the movable platen 21**.** The mold clamping device has a mold clamping cylinder device (not shown) for driving the movable platen 21 and a support plate (not shown) to which the mold clamping cylinder device is attached. The support plate and the stationary platen 11 are connected to each other by a plurality (for example, four) of tie bars 520.

The stationary platen 11 is fixed to the frame 500 by bolts or the like. The movable platen 21 and the intermediate mold support frame 31 are mainly supported from below by the guide member 510 and move in the first direction along the tie bars 520.

In addition, the injection blow molding machine 1 includes a plurality of female mold portions 12 and a cavity plate 13 provided around the female mold portions 12 so as to cover at least a part of an outer peripheral surface 120 of each of the plurality of female mold portions 12. In the present embodiment, a total of twelve female mold portions 12 are provided to form two rows each having six female mold portions arranged in the up-down direction, and the cavity plate 13 into which the twelve female mold portions 12 are fitted is attached to the stationary mold 10.

The movable mold 20 has the movable blow split mold 22, a first bottom mold 23, a second bottom mold 24, and a suction device 25 that suctions the final molding product 600.

The movable blow split mold 22 has the drive-side movable portion 22a and the driven-side movable portion 22b that are disposed to face each other. The drive-side movable portion 22a and the driven-side movable portion 22b are moved in the second direction by a split mold driving cylinder device 26 to be brought into close contact with each other or to be separated from each other. A blow molding female mold 27 is formed by bringing the drive-side movable portion 22a and the driven-side movable portion 22b into close contact with each other. In the present embodiment, the blow molding female molds 27 is formed by arranging six sets of the drive-side movable portion 22a and the driven-side movable portion 22b arranged in the up-down direction, and two sets of the drive-side movable portions 22a and the driven-side movable portions 22b are disposed side by side in the second direction. The drive-side movable portion 22a is connected to a piston rod 26a of the split mold driving cylinder device 26, and is directly moved by the split mold driving cylinder device 26. The driven-side movable portion 22b is connected to the drive-side movable portion 22a of another set, and is moved in the second direction to come into contact with or separate from the drive-side movable portion 22a of its own set. For example, the split mold driving cylinder device 26 can be exemplified as a pneumatic cylinder device.

The first bottom mold 23 is attached to the movable platen 21. A through-hole 23a penetrating in the first direction is formed in the first bottom mold 23. The through-hole 23a is disposed on an extension line of the center line of the final molding product 600 in a state in which the drive-side movable portion 22a and the driven-side movable portion 22b are mold-closed, and forms a space in which the second bottom mold 24 can be disposed. A recessed portion 23b recessed from a contact surface of the first bottom mold 23 with the movable blow split mold 22 is formed around the through-hole 23a.

The second bottom mold 24 is a columnar member, and is disposed in the through-hole 23a of the first bottom mold 23. The second bottom mold 24 is disposed to slightly protrude from the recessed portion 23b of the first bottom mold 23 to the first side in the first direction. The diameter of the second bottom mold 24 is slightly smaller than the diameter of the through-hole 23a of the first bottom mold 23. Therefore, a gap is formed between the first bottom mold 23 and the second bottom mold 24 in a state in which the second bottom mold 24 is disposed in the through-hole 23a.

The suction device 25 is composed of a vacuum pump or the like, and suctions the final molding product 600. Specifically, the suction device 25 suctions the final molding product 600 by using a gap formed between the first bottom mold 23 and the second bottom mold 24 as a passage for air during suction.

The intermediate mold 30 has a rotating frame 35 that is rotatably attached to the intermediate mold support frame 31, and a core mold frame 50 that is non-rotatably attached to the intermediate mold support frame 31.

Here, the intermediate mold support frame 31 includes rectangular parallelepiped leg portions 32 that are disposed at both end portions in the second direction and are molded such that the up-down direction is a longitudinal direction and the first direction is a short direction, a top plate portion 33u that connects upper portions of the both leg portions 32, and a bottom portion 33b that connects lower portions of both the leg portions 32. A cylindrical support column 34 that is attached to penetrate the leg portion 32 in the second direction is fixed to a central portion of each of the leg portions 32 in the up-down direction. In addition, a through-hole (not shown) in the first direction through which the tie bar 520 passes is formed in the upper portion and the lower portion of each of the leg portions 32.

The rotating frame 35 is attached to the outer periphery of the support column 34 via a bearing member 36 such as a ball bearing, and is rotatable with respect to the intermediate mold support frame 31 with the center line of the support column 34 as a rotation center. In addition, in the present embodiment, an annular driven gear 37 is attached to a side surface of the rotating frame 35, and a drive gear 38b attached to a rotary shaft 38a of an electric motor 38 meshes with the driven gear 37. Accordingly, the rotating frame 35 rotates around the support column 34 by the operation of the electric motor 38.

The intermediate mold 30 includes a plurality of guide bars 39 attached to the rotating frame 35 to extend in the first direction, a gripping frame 40 attached to the guide bar 39 to be slidable in the first direction, and a restricting portion 45 that restricts movement of the gripping frame 40 with respect to the guide bar 39. In the present embodiment, the intermediate mold 30 has one guide bar 39 at each of an upper portion and a lower portion, which is each of both end portions in the second direction, at a first-side end portion of the rotating frame 35 in the mold opening state shown in FIGS. 1 and 2. In addition, a second-side end portion of the rotating frame 35 has one guide bar 39 at the upper portion and the lower portion, which is each of both end portions in the second direction. That is, the intermediate mold 30 according to the present embodiment has a total of eight guide bars 39. However, the intermediate mold 30 may have a total of four guide bars extending to both sides of the stationary mold 10 side and the movable mold 20 side, with each guide bar provided at each of an upper portion and a lower portion of each of both end portions in the second direction.

In the state shown in FIGS. 1 and 2, one gripping frame 40 is provided at each of both end portions of the rotating frame 35 in the first direction. The gripping frame 40 is attached to be slidable with respect to the four guide bars 39 provided on the same side with respect to the center line of the support column 34, and to be lockable to and releasable from tip parts 39a of the guide bars 39. In the state shown in FIGS. 1 and 2, the gripping frame 40 is locked to the tip part 39a of the guide bar 39 by the restricting portion 45, and is not slidable with respect to the guide bar 39. When the fitting between the restricting portion 45 and the tip part 39a of the guide bar 39 is released, the gripping frame 40 is slidable with respect to the guide bar 39.

The gripping frame 40 has a gripping device 41 that molds or grips an opening portion 620 of the final molding product 600. The gripping device 41 has a screw split mold 42 that molds or grips the opening portion 620, a slide plate 43 to which the screw split mold 42 is attached, and a gripping release member 44 that releases the gripping of the opening portion 620. The gripping release member 44 is driven by a gripping release driving device (not shown). The screw split mold 42 molds the opening portion 620 in a mold closed state during the injection molding and grips the opening portion 620 in the mold closed state during the blow molding. In addition, the screw split mold 42 releases the opening portion 620 by performing mold opening after the blow molding is completed.

More specifically, the screw split mold 42 has a configuration that can be split in the second direction, and each half-split portion of the screw split mold 42 is attached to each half-split portion of the slide plate 43. In addition, the half-split portion of the slide plate 43 is attached to the gripping frame 40 to be slidable in the second direction. The gripping release member 44 includes a configuration that can be split in the second direction, and each of the half-split portions of the gripping release members 44 is attached to the half-split portion of the slide plate 43. When the gripping release member 44 is pushed apart in the second direction, the half-split portions of the slide plate 43 and the half-split portions of the screw split mold 42 are also pushed apart in the second direction and split. Accordingly, at the blow station, the gripping of the opening portion 620 of the final molding product 600 is released after the blow molding is completed.

In the present embodiment, the screw split mold 42 is provided at a position corresponding to the female mold portion 12 and the blow molding female mold 27 of the movable blow split mold 22, which are attached to the stationary mold 10. That is, the screw split molds 42 form two rows each having six screw split molds arranged in the up-down direction in the state shown in FIGS. 1 and 2.

The restricting portion 45 is releasably connected to a tip part (not shown) of an injection-side member (not shown) attached to the stationary platen 11, and is operated by the tip part of the injection-side member to lock or release the tip part 39a of the guide bar 39. In addition, the restricting portion 45 is also releasably connected to a tip part (not shown) of a blow-side member (not shown) attached to the movable platen 21, and is operated by the tip part of the blow-side member to lock or release the tip part 39a of the guide bar 39.

The core mold frame 50 is fixed to the support column 34, and is non-rotatably attached to the intermediate mold support frame 31.

An injection core mold 51 is attached to a surface of the core mold frame 50 on the stationary platen 11 side, and a blow guide 52 is attached to a surface of the core mold frame 50 on the movable platen 21 side.

The injection core mold 51 has a base portion 51a and a male mold portion 51b, and forms a cavity 17 having the shape of the preform 610 between the injection core mold 51 and the female mold portion 12 in the mold closed state.

The blow guide 52 includes a base portion 52a, and forms a blow molding space having a shape of the final molding product 600 in the mold closed state by being brought into close contact with an inlet of the blow molding female mold 27 formed by the drive-side movable portion 22a and the driven-side movable portion 22b being brought into close contact with each other.

In addition, the intermediate mold 30 has a stretching rod 53 that can protrude from a base portion 52a of the blow guide 52, a connecting plate 54 to which base portions of a plurality of the stretching rods 53 are attached, and a stretching rod driving device 55 for protruding the stretching rod 53. For example, the stretching rod driving device 55 can be exemplified as a pneumatic cylinder device. For example, the stretching rod driving device 55 can be exemplified as being attached to an outer surface of an upper portion and an outer surface of a lower portion of the core mold frame 50. The connecting plate 54 is connected to a piston rod of the stretching rod driving device 55. When the stretching rod driving device 55 operates, the connecting plate 54 connected to the piston rod moves, and the stretching rod 53 protrudes into the preform 610. In the present embodiment, the final molding product 600 is molded from the preform 610 by stretching blow molding in which blow molding is performed by protruding the stretching rod 53 into the preform 610 and blowing high-pressure air into the preform 610 while the preform 610 is stretched.

In addition, the injection blow molding machine 1 includes an intermediate mold driving cylinder device 15 that moves the intermediate mold support frame 31 in the first direction with respect to the stationary platen 11, and a connecting rod 16 connected to a piston rod of the intermediate mold driving cylinder device 15. The intermediate mold driving cylinder device 15 is fixed to the stationary platen 11, and the connecting rod 16 is attached to the intermediate mold support frame 31. The intermediate mold driving cylinder device 15 is operated to move the intermediate mold support frame 31 with respect to the stationary platen 11. Accordingly, the injection blow molding machine 1 can perform the injection molding and the blow molding by performing the mold closing, the mold clamping, and the mold opening at separate timings at the injection station and the blow station.

In addition, the injection blow molding machine 1 has a control device 70 that controls the injection blow molding machine 1. The control device 70 includes a central processing unit (CPU) (not shown), a read only memory (ROM) (not shown) that is a storage area for storing a program, and a random access memory (RAM) (not shown) that is an execution area of the program. The control device 70 realizes various functions by causing the CPU to execute a program stored in a ROM or a storage device such as a hard disk drive (HDD) or a semiconductor memory. In addition, detection results from various sensors are input to the control device 70. The control device 70 controls the operations of the injection device (not shown), a mold clamping device (not shown), the intermediate mold driving cylinder device 15, the electric motor 38, the gripping release driving device (not shown), the stretching rod driving device 55, and the like, based on the detection results from the various sensors. Hereinafter, the operation of the injection blow molding machine 1 performed based on the control by the control device 70 will be described.

### (Operation)

The injection blow molding machine 1 according to the present embodiment molds twelve preforms 610 equal to the number the female mold portions 12 by the injection molding at the injection station in one molding cycle. In addition, the injection blow molding machine 1 performs, at the blow station, the blow molding by using the number of preforms 610 molded at the injection station in the previous molding cycle, and molds twelve final molding products 600.

First, the mold clamping device (not shown) operates from a state in which the mold opening is performed at the injection station and the blow station shown in FIGS. 1 and 2, and the mold closing is started. Accordingly, the movable platen 21 moves from the mold opening state to the mold closed state, that is, moves to approach the stationary platen 11. Then, while the movable platen 21 moves from the mold opening state to the mold closed state, the intermediate mold driving cylinder device 15 operates, and the intermediate mold support frame 31 moves from the mold opening state to the mold closed state, that is, moves to approach the stationary platen 11.

In addition, as the intermediate mold support frame 31 approaches the stationary platen 11, the restricting portion 45 of the gripping frame 40 that is fitted to the tip part 39a of the guide bar 39 attached to the side surface of the rotating frame 35 on the stationary platen 11 side comes into contact with the tip part (not shown) of the injection-side member (not shown) attached to the stationary platen 11. Accordingly, the fitting between the restricting portion 45 and the tip part 39a of the guide bar 39 is released, and the lock between the gripping frame 40 and the guide bar 39 is released.

Similarly, the intermediate mold support frame 31 approaches the movable platen 21 while the movable platen 21 moves from the mold opening state to the mold closed state. Then, the restricting portion 45 of the gripping frame 40 that is fitted to the tip part 39a of the guide bar 39 attached to the side surface of the rotating frame 35 on the movable platen 21 side comes into contact with the tip part (not shown) of the blow-side member (not shown) attached to the stationary platen 11. Accordingly, the fitting between the restricting portion 45 and the tip part 39a of the guide bar 39 is released, and the lock between the gripping frame 40 and the guide bar 39 is released.

Before the movable platen 21 moves from the mold opening state to the mold closed state, the split mold driving cylinder device 26 operates to move and close the drive-side movable portion 22a and the driven-side movable portion 22b in the second direction to form the blow molding female mold 27.

Then, when the movable platen 21 is in the mold closed state, the mold closing is completed at the injection station and the blow station. In this case, since the gripping frame 40 at the injection station and the blow station is unlocked from the guide bar 39, the gripping frame 40 is pushed by the injection-side member (not shown) or the blow-side member (not shown) to slides with respect to the guide bar 39, and comes into contact with the core mold frame 50.

In this case, as shown in FIG. 3A, at the injection station, each of the male mold portions 51b enters each of the female mold portions 12 attached to the stationary mold 10. In addition, the cavity 17 is formed between the inner surfaces of the female mold portion 12 and the screw split mold 42 and the outer surface of the male mold portion 51b. Then, as shown in FIG. 3B, the resin injected by the injection device is filled in the cavity 17. Even after the filling of the resin is completed, the mold closed state is continued, and the resin in the cavity 17 is cooled. In this way, the preform 610 having a trunk portion 611 having a columnar appearance and a tip part 612 having a hemispherical appearance is molded at the injection station.

At the blow station, as shown in FIG. 4A, the opening portion of the blow molding female mold 27 formed by the drive-side movable portion 22a and the driven-side movable portion 22b is in a state in which the screw split mold 42 gripping the opening portion 620 of the preform 610 is pressed. Accordingly, the flange portion of the preform 610 is pressed against an outer surface of the opening portion of the blow molding female mold 27, and a portion of the preform 610 beyond the flange portion enters the blow molding female mold 27. In addition, a tip part 52b of the base portion 52a of the blow guide 52 enters the opening portion 620 of the preform 610. Then, the stretching rod driving device 55 operates, and the stretching rod 53 protrudes toward the deep side of the blow molding female mold 27. At the same time, high-pressure air is blown into the inside of the preform 610, so that the preform 610 is expanded and pressed against an inner surface of the blow molding female mold 27. Accordingly, as shown in FIG. 4B, a vial-shaped or bottle-shaped bottomed container having a shape of the inner surface of the blow molding female mold 27 is molded as the final molding product 600. When the stretching is completed, the stretching rod 53 is returned to its original position from the protruding state. Then, when the blow molding is completed, a mold clamping force applied to the movable platen 21 by the mold clamping device is released.

Thereafter, the movable platen 21 moves in a direction away from the core mold frame 50 while maintaining a positional relationship between the drive-side movable portion 22a and the driven-side movable portion 22b, and the gripping device 41. Then, when a predetermined gap is formed between the screw split mold 42 and the blow guide 52, the drive-side movable portion 22a and the driven-side movable portion 22b move in the second direction. In addition, the screw split mold 42 is pushed apart and opened in the second direction, thereby releasing the opening portion 620. Then, when the spacing between the drive-side movable portion 22a and the driven-side movable portion 22b is at least larger than the outer diameter of the final molding product 600, the final molding product 600 falls downward from between the drive-side movable portion 22a and the driven-side movable portion 22b. The final molding product 600 is discharged below the injection blow molding machine 1 and is housed in a housing device (not shown).

Thereafter, the intermediate mold driving cylinder device 15 operates, and the intermediate mold support frame 31 moves from the mold closed state to the mold opening state, that is, moves away from the stationary platen 11. Since the restricting portion 45 of the gripping frame 40 at the injection station is fitted to the tip part (not shown) of the injection-side member (not shown), the gripping frame 40 slides in the axial direction of the guide bar 39 even when the intermediate mold support frame 31 moves toward the mold opening state. Therefore, the screw split mold 42 maintains a state of being fitted to a portion near the inlet of the female mold portion 12. As a result, since the core mold frame 50 moves together with the intermediate mold support frame 31, the male mold portion 51b is removed from the female mold portion 12 attached to the stationary mold 10.

Thereafter, when the gripping frame 40 reaches the tip part 39a of the guide bar 39, the restricting portion 45 releases the fitting with the tip part of the injection-side member and fits with the tip part 39a of the guide bar 39. Thus, the gripping frame 40 and the guide bar 39 are locked together. Therefore, when the intermediate mold support frame 31 further moves away from the stationary platen 11, the gripping frame 40 also moves together. Thus, the screw split mold 42 is removed from the female mold portion 12. In this case, since the half-split portions of the screw split mold 42 are biased in the center direction by a biasing member and are coupled to each other, the opening portion 620 of the preform 610 is gripped.

Accordingly, the gripping frame 40 at the injection station reaches a position away from the stationary mold 10 in a state in which the screw split mold 42 has gripped all the twelve preforms 610.

Subsequently, the electric motor 38 operates, and the rotating frame 35 is rotated about the center line of the support column 34. Accordingly, the gripping frame 40 in which the screw split mold 42 has gripped the preform 610 moves from the injection station to the blow station, and the other gripping frame 40 moves from the blow station to the injection station.

Then, when the rotation of the rotating frame 35 is completed, the mold opening is performed at the injection station and the blow station. Accordingly, one molding cycle is completed. Thereafter, the above-described operation is repeated and executed, and a predetermined number of molding cycles are repeated.

Hereinafter, the female mold portion 12 and the cavity plate 13 will be described in detail.

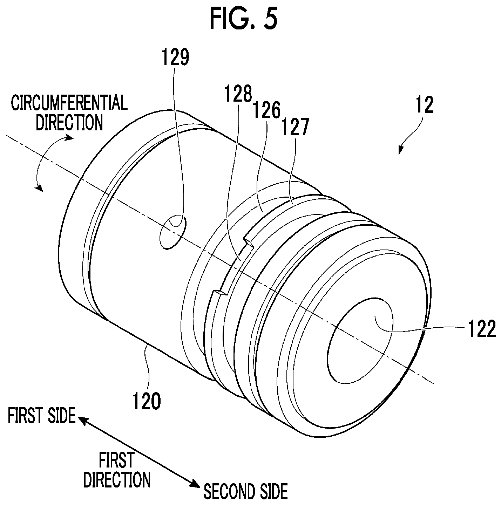

FIG. 5 is a view showing an example of the appearance of the female mold portion 12.

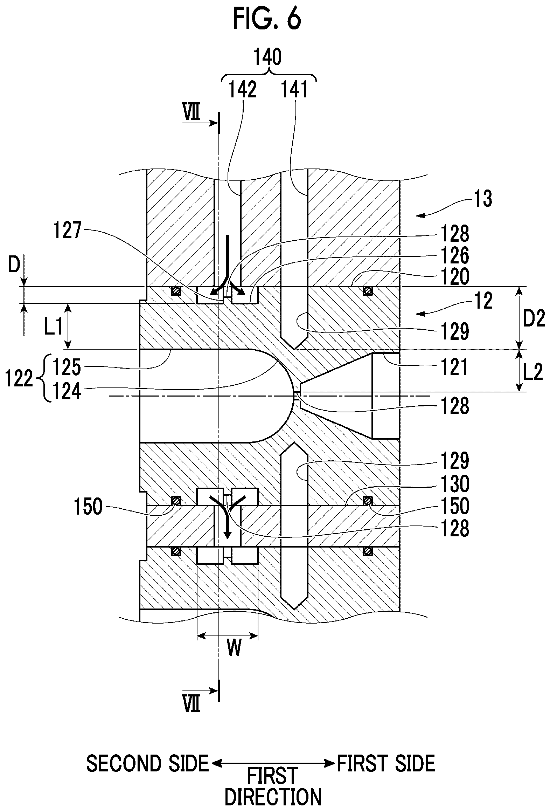

FIG. 6 is a view showing an example of a cross section of the female mold portion 12 and the cavity plate 13.

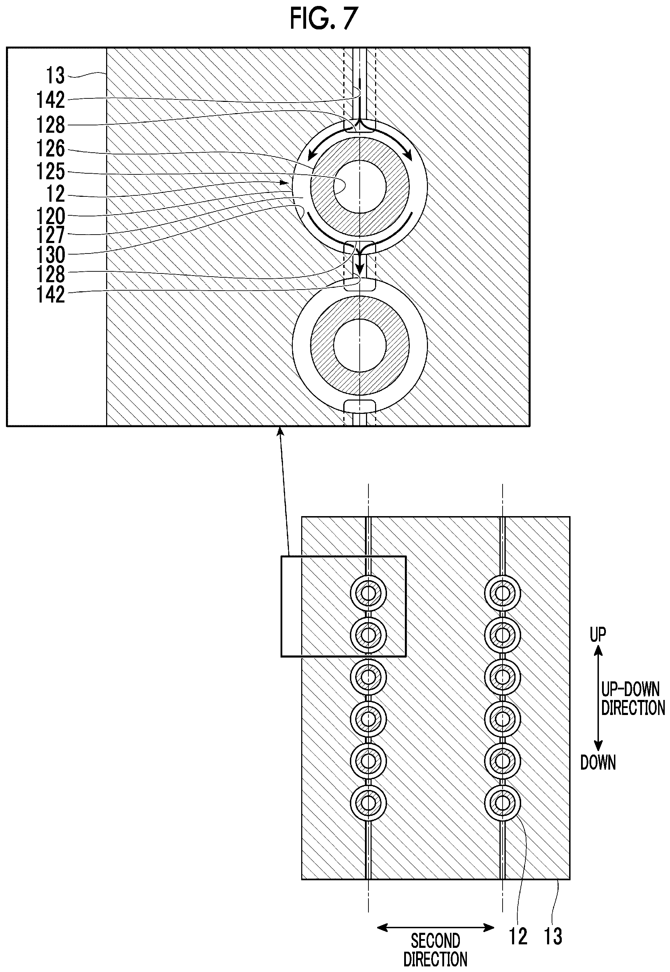

FIG. 7 is a view showing an example of a cross section of a VII-VII portion of FIG. 6.

The female mold portion 12 has a columnar shape. The female mold portion 12 has a first recessed portion 121 recessed from a first-side end surface thereof toward the second side in the first direction, a second recessed portion 122 recessed from a second-side end surface thereof toward the first side in the first direction, and a central hole 123 allowing the first recessed portion 121 and the second recessed portion 122 to pass therethrough.

The first recessed portion 121 is a portion that is an inlet to the female mold portion 12 for the resin injected by the injection device (not shown).

The second recessed portion 122 is a recessed portion along the outer shape of the preform 610. The second recessed portion 122 has a semi-spherical portion 124 provided on the first side and a columnar portion 125 provided on the second side. The cavity 17 (refer to FIG. 3A) is formed by inserting the male mold portion 51b into the second recessed portion 122.

The central hole 123 is a columnar through-hole formed between the first recessed portion 121 and the second recessed portion 122. The center line of the central hole 123 is formed to be the same as the center line of the columnar portion 125, and the diameter of the central hole 123 is smaller than the diameter of the columnar portion 125. The central hole 123 is an inlet to the cavity 17 for the resin injected by the injection device (not shown). In other words, the central hole 123 functions as a gate for filling resin into the second recessed portion 122 serving as a product portion.

A groove 126 recessed from the outer peripheral surface 120 is formed over the entire periphery of the second recessed portion 122 in the female mold portion 12. The groove 126 is formed in a portion corresponding to the columnar portion 125 of the second recessed portion 122. The width W of the groove 126, which is the dimension in the first direction, is larger than the depth D of the groove 126. The groove 126 has a partition wall 127 that separates a first-side (an example of one side) portion and a second-side (an example of the other side) portion from each other at a central portion in the first direction. The dimension of the partition wall 127 in the first direction is smaller than the diameter of a second-side up-down through-hole 142 (to be described below). A cutout 128, which allows the first-side portion and the second-side portion rather than the partition wall 127 in the groove 126 to communicate with each other, is formed in a part of the partition wall 127 in the circumferential direction. Two cutouts 128 are formed at equal spacings in the circumferential direction. It can be exemplified that the cutouts 128 are formed at a position corresponding to the second-side up-down through-hole 142 (to be described below), and the dimension of the cutouts 128 in the circumferential direction is the same as the dimension of the diameter of the second-side up-down through-hole 142.

In addition, a plurality of (two in the present embodiment) intersecting recessed portions 129, which are recessed in a columnar shape in a direction (a direction perpendicular to the first direction in FIG. 6) intersecting the first direction from the outer peripheral surface 120, are formed in the circumferential direction in the female mold portion 12. The intersecting recessed portion 129 is formed at a portion corresponding to the central hole 123 of the second recessed portion 122. In addition, it can be exemplified that the intersecting recessed portion 129 is formed at a position corresponding to the first-side up-down through-hole 141 (described below) and the diameter of the intersecting recessed portion 129 is formed to be the same as the hole of the first-side up-down through-hole 141. The depth D2 of the intersecting recessed portion 129 is larger than the depth D of the groove 126.

The cavity plate 13 has a rectangular parallelepiped shape. As viewed in the first direction, the cavity plate 13 is molded such that the up-down direction is the longitudinal direction, and the second direction is the short direction. A first through-hole 130 in the first direction having a columnar shape is formed in the cavity plate 13, and the female mold portion 12 is fitted into the first through-hole 130. A total of twelve first through-holes 130 are formed to form two rows each having six first through-holes 130 arranged in the up-down direction.

In addition, an up-down through-hole 140 in the up-down direction is formed inside the cavity plate 13. The up-down through-hole 140 includes the first-side up-down through-hole 141 provided on the first side and the second-side up-down through-hole 142 provided on the second side. Two first-side up-down through-holes 141 and two second-side up-down through-holes 142 are respectively formed in the second direction to correspond to the rows each having six arranged first through-holes 130. The up-down through-hole 140 is formed to allow the first through-holes 130 arranged in the up-down direction to communicate with each other. In addition, the up-down through-hole 140 is formed to allow the first through-holes 130 located at an uppermost portion and a lowermost portion in the six first through-holes 130 arranged in the up-down direction and the outside of the cavity plate 13 to communicate with each other. In addition, the six up-down through-hole 140 is formed to pass through the centers of the six arranged first through-holes 130. The up-down through-hole 140 can be exemplified as being columnar.

In the present embodiment, the cavity plate 13, which is an example of a peripheral member, is provided around and holds the female mold portion 12 to cover a part of the female mold portion 12. That is, the female mold portion 12 is fitted into each of the first through-holes 130 formed in the cavity plate 13, and the position of the female mold portion 12 is maintained by the cavity plate 13. For example, the female mold portion 12 is press-fitted into the first through-hole 130. In addition, in the first direction, the intersecting recessed portion 129 of the female mold portion 12 is fitted to face the first-side up-down through-hole 141 of the cavity plate 13, and the partition wall 127 of the groove 126 of the female mold portion 12 is fitted to face the second-side up-down through-hole 142 of the cavity plate 13. In addition, in the circumferential direction of the female mold portion 12, the intersecting recessed portion 129 of the female mold portion 12 is fitted to face the first-side up-down through-holes 141 of the cavity plate 13, and the cutout 128 of the partition wall 127 of the groove 126 of the female mold portion 12 is fitted to face the second-side up-down through-hole 142 of the cavity plate 13.

As water is supplied to the intersecting recessed portion 129 of the female mold portion 12 via the first-side up-down through-hole 141 of the cavity plate 13, the first-side up-down through-hole 141 functions as a first water channel through which the water for cooling the central hole 123 of the female mold portion 12 flows. The number of the intersecting recessed portions 129 formed around the central hole 123 of the female mold portion 12 is not limited, and three or more intersecting recessed portions 129 may be formed. The three or more intersecting recessed portions 129 can be exemplified as being formed radially around the central hole 123. In addition, a hole may be formed in the cavity plate 13 to correspond to each of the plurality of intersecting recessed portions 129, and water may be supplied to the intersecting recessed portion 129 via the hole. In addition, the plurality of intersecting recessed portions 129 may be configured to communicate with each other to allow water to flow therebetween.

In addition, as water is supplied to the groove 126 of the female mold portion 12 via the second-side up-down through-hole 142 of the cavity plate 13, water flows around the columnar portion 125 of the second recessed portion 122 of the female mold portion 12. The second-side up-down through-hole 142 of the cavity plate 13 and the groove 126 of the female mold portion 12 functions as a second water channel through which water for cooling the inside of the female mold portion 12 flows.

More specifically, the water supplied from an upper portion of the second-side up-down through-hole 142 flows into an uppermost portion of the groove 126 of the female mold portion 12 fitted into an uppermost portion of the six arranged first through-holes 130 from the second-side up-down through-hole 142. As described above, since the dimension of the partition wall 127 of the female mold portion 12 in the first direction is smaller than the diameter of the second-side up-down through-holes 142, the water flows into both the first-side portion and the second-side portion rather than the partition wall 127 in the groove 126 from the second-side up-down through-holes 142 as shown in FIG. 6. Then, the water flowing into each of the first-side portion and the second-side portion rather than the partition wall 127 in the groove 126 flows in the clockwise direction and the counterclockwise direction as shown in FIG. 7. That is, the water that has reached the groove 126 of the female mold portion 12 through the second-side up-down through-hole 142 branches in four directions. Then, the water branched in four directions reaches the lowermost portion of the groove 126, joins together, and flows into the second-side up-down through-hole 142 formed below the female mold portion 12.

The hole center of the second-side up-down through-hole 142 coincides with the partition wall 127 of the groove 126, but the second-side up-down through-hole 142 and the cutout 128 correspond to each other. Thus, the reduction of the flow path area for water due to the provision the partition wall 127 in the groove 126 is suppressed. In other words, the cutout 128 is formed such that the flow path area of the second-side up-down through-hole 142 and the opening area of the groove 126 to the second-side up-down through-hole 142 coincide with each other. Accordingly, it is possible to allow cooling water to flow through the second water channel without stagnation.

Meanwhile, a mold clamping force in the first direction when the mold clamping is performed acts on the female mold portion 12. In addition, the injection pressure caused by the injection of the resin into the cavity 17 and the pressure of the water supplied to the groove 126 and the intersecting recessed portion 129 act on the female mold portion 12. Therefore, the female mold portion 12 needs to have a strength capable of withstanding the mold clamping force, the injection pressure, and the water pressure. However, when the groove 126 formed in the female mold portion 12 is increased, it is difficult to secure the strength capable of withstanding the mold clamping force, the injection pressure, and the water pressure. In the female mold portion 12 according to the present embodiment, the partition wall 127 is provided in the groove 126. Thus, the strength is prevented from being smaller than the strength capable of withstanding the mold clamping force due to an increase in the width W of the groove 126.

The above-described injection blow molding machine 1 is an example of the injection molding apparatus including the female mold portion 12 that is columnar and has the second recessed portion 122 (an example of the recessed portion) formed along the outer shape of the preform 610 therein, and the cavity plate 13 (an example of the peripheral member) provided to be in contact with the periphery of the female mold portion 12 so as to cover at least a part of the outer peripheral surface 120 of the female mold portion 12. The cavity plate 13 is formed with the second-side up-down through-hole 142 (an example of the hole) extending in the direction intersecting the first direction (an example of the center line direction) of the female mold portion 12. The groove 126 recessed from the outer peripheral surface 120 is formed over the entire periphery of the female mold portion 12 at a position outside the second recessed portion 122 and facing the second-side up-down through-hole 142. The cavity plate 13 and the female mold portion 12 are in contact with each other such that water flowing through the second-side up-down through-holes 142 of the cavity plate 13 and the groove 126 of the female mold portion 12 does not leak. Accordingly, a flow path through which water (an example of a medium) for cooling the second recessed portion 122 flows is formed.

Here, in order to cool the second recessed portion 122, an object having a configuration in which, for example, a hole that is perpendicular to the first direction similarly to the intersecting recessed portion 129 and does not extend in the circumferential direction is formed outside the second recessed portion 122 is considered as a female mold portion according to a comparative example. In the case of the female mold portion according to the comparative example, a portion where the hole is formed and a portion where the hole is not formed are mixedly present in the circumferential direction outside the second recessed portion 122. Thus, a temperature difference of the preform 610 in the circumferential direction becomes large. In contrast, according to the injection blow molding machine 1 according to the present embodiment, since the flow path is formed in the groove 126 formed over the entire periphery, the temperature difference of the preform 610 in the circumferential direction is reduced.

In addition, the width W of the groove 126, which is the dimension in the first direction, is larger than the depth D of the groove 126. Therefore, the temperature of the preform 610 decreases over a wide range in the first direction. However, by making a distance L1 between a bottom portion of the groove 126 and the second recessed portion 122 larger than, for example, a distance L2 between the bottom portion of the intersecting recessed portion 129 and the central hole 123, the temperature of the preform 610 is prevented from being excessively lowered due to an increase in the width W. In addition, even in the portion of the female mold portion 12 around the second recessed portion 122, a portion where the groove 126 is formed and a portion where the groove 126 is not formed are mixedly present in the first direction. However, an increase in the temperature difference due to the presence or absence of the groove 126 is suppressed by reducing the depth D.

In addition, for example, in a case where a narrow groove is formed in a helical shape around the second recessed portion 122, a portion inside the helical groove and a portion inside the groove are alternately present in the first direction in the trunk portion 611 of the preform 610. In addition, in a case where the groove is formed in a helical shape, the cooling water is warmed when flowing through the helical groove, and the temperature on the upstream side and the temperature on the downstream side are different from each other. As a result, these make it difficult to reduce the temperature difference of the trunk portion 611 of the preform 610 in the first direction. In contrast, in the groove 126 according to the present embodiment, the groove 126 having a large width W are formed over the entire periphery. Thus, the temperature difference of the trunk portion 611 of the preform 610 in the first direction is reduced.

In addition, the central hole 123 (an example of the gate) that is an inlet for resin into the second recessed portion 122 is formed in the female mold portion 12, and the intersecting recessed portion 129 recessed in the direction intersecting the outer peripheral surface 120 in the first direction is formed outside the central hole 123. In addition, the depth D2 of the intersecting recessed portion 129 is larger than the depth D of the groove 126. Since the inside of the central hole 123 is cooled by the intersecting recessed portion 129, the preform 610 is easily separated from the second recessed portion 122 of the female mold portion 12. Meanwhile, since the diameter of the intersecting recessed portion 129 is smaller than the width W of the groove 126 and the intersecting recessed portion 129 is not formed over the entire periphery, the strength is prevented from being smaller than the strength capable of withstanding the mold clamping force, the injection pressure, and the water pressure due to the fact that the depth D2 of the intersecting recessed portion 129 is larger than the depth D of the groove 126.

In addition, a gap between the outer peripheral surface 120 of the female mold portion 12 and the inner peripheral surface of the first through-hole 130 of the cavity plate 13 is sealed by an O-ring 150 fitted into a groove formed in each of both end portions of the female mold portion 12 in the first direction. Therefore, even when water is supplied to the groove 126 or the intersecting recessed portion 129 formed in the female mold portion 12 via the hole (for example, the up-down through-hole 140) formed in the cavity plate 13, water leakage from the gap between the female mold portion 12 and the cavity plate 13 is suppressed.

The liquid used for cooling is not limited to water. For example, the liquid used for cooling may be oil. In addition, the medium used for cooling is not limited to a liquid, and may be a gas.

In addition, a cooling mechanism for the preform 610 composed of the female mold portion 12 and the cavity plate 13 described above may be applied to an injection molding unit in a device including a heating unit that heats the preform 610 before the blow molding is performed after the preform 610 is molded.

### Brief Description of the Reference Symbols

- 1:: Injection blow molding machine
- 10:: Stationary mold
- 11:: Stationary platen
- 12:: Female mold portion
- 13:: Cavity plate (example of peripheral member)
- 17:: Cavity
- 20:: Movable mold
- 21:: Movable platen
- 35:: Rotating frame
- 40:: Gripping frame
- 41:: Gripping device
- 42:: Screw split mold
- 50:: Core mold frame
- 120:: Outer peripheral surface
- 122:: Second recessed portion (example of recessed portion)
- 123:: Central hole (example of gate)
- 126:: Groove
- 127:: Partition wall
- 128:: Cutout
- 129:: Intersecting recessed portion
- 130:: first through-hole
- 141:: First-side up-down through-hole
- 142:: Second-side up-down through-hole (example of hole)
- 600:: Final molding product
- 610:: Preform

## Claims

1. An injection molding apparatus (1) comprising:
a female mold portion (12) that is columnar and has a recessed portion (122) formed therein; and
a peripheral member (13) that is provided around the female mold portion (12) to cover at least a part of an outer peripheral surface (120) of the female mold portion (12),
wherein a hole (142) extending in a direction intersecting a center line direction of the female mold portion (12) is formed in the peripheral member (13),
a groove (126) recessed from the outer peripheral surface (120) is formed over an entire periphery of the female mold portion (12) at a position outside the recessed portion (122) and facing the hole (142), and
a flow path through which a medium for cooling the recessed portion (122) flows is formed by the hole (142) of the peripheral member (13) and the groove (126) of the female mold portion (12).

2. The injection molding apparatus (1) according to claim 1,
wherein the groove (126) has a dimension in the center line direction greater than a depth (D) of the groove (126).

3. The injection molding apparatus (1) according to claim 2,
wherein the groove (126) includes a partition wall (127) that separates a portion on one side in the center line direction from a portion on the other side in the center line direction at a central portion in the center line direction.

4. The injection molding apparatus (1) according to claim 3,
wherein a cutout (128) that allows the portion on the one side and the portion on the other side to communicate with each other is formed in a portion of the partition wall (127) in a circumferential direction.

5. The injection molding apparatus (1) according to claim 4,
wherein the cutout (128) is formed at a position facing the hole (142).

6. The injection molding apparatus (1) according to claim 1,
wherein a gate (123) that serves as an inlet for resin to the recessed portion (122) is formed in the female mold portion (12), and an intersecting recessed portion (129), which is recessed in a direction intersecting the center line direction from the outer peripheral surface (120) and allows the medium to flow therethrough, is formed outside the gate (123).

7. The injection molding apparatus (1) according to claim 6,
wherein a distance between a bottom portion of the intersecting recessed portion (129) and the gate (123) may be smaller than a distance (L1) between a bottom portion of the groove (126) and the recessed portion (122).
